# EUROPEAN PATENT SPECIFICATION

(11) **EP 2 045 117 B1**
(45) Date of publication and mention of the grant of the patent: **14.11.2012**
(21) Application number: 08017227.3
(22) Date of filing: 30.09.2008
(51) Int. Cl.: B60L 11/18

(54) **Small-sized motorized vehicle**
Kleines Kraftfahrzeug
Véhicule motorisé de petite taille

(30) Priority: 04.10.2007 JP 2007260683
(43) Date of publication of application: 08.04.2009
(73) Proprietor: HONDA MOTOR CO., LTD., Tokyo 107-8556 (JP)
(72) Inventor: Fukuzumi, Yasumi, Wako-shi Saitama (JP); Hosaka, Jun, Wako-shi Saitama (JP)
(74) Representative: Prechtel, Jörg

(56) References cited:
- US-A- 5 778 326
- US-A- 5 815 824

## Description

The present invention relates to a small-sized motorized vehicle that is capable of traveling on sidewalks and used as transportation means for the elderly or other people, such as a motorized wheel chair.

Some small-sized motorized vehicles are known to have a battery remaining indicator and display the remaining amount of battery.

As disclosed in JP-A 4-166779 and JP-A 2003-010257, some small-sized motorized vehicles of this kind are known to have a battery consumption indicator and a GPS (global positioning system)-based navigation system.

The battery consumption indicator disclosed in JP-A 4-166779 includes current magnitude detection means for detecting the magnitude of current supplied from a battery to a load; conversion means for converting the detected magnitude of current into a digital value; summing means for receiving digital value inputs at fixed time intervals and summing the product of the time interval and the magnitude of current; and display means for calculating the battery consumption from the summed value and displaying the battery consumption.

The small-sized motorized vehicle disclosed in JP-A 2003-010257 has a GPS receiver mounted on a vehicle body and can obtain the current location of the vehicle. The motorized vehicle includes wheel speed detection means for detecting the speed of left and right wheels; inclination detection means for detecting the inclination of a road; a collected path information storage section that collects and stores paths along which the vehicle has traveled; and a map information storage section that stores map information in advance. A user (vehicle occupant) of the vehicle stores path information along which the vehicle has traveled in the collected path information storage section and updates the map information in the map information storage section based on the path information in the collected path information storage section, whereby the user of the vehicle can be effectively navigated.

The battery consumption indicator disclosed in JP-A 4-166779, when mounted on a small-sized motorized vehicle, displays the remaining amount of battery, but does not inform how long the vehicle can travel. The user therefore always has a sense of fear during traveling (on the way home) that the battery may run out before the user arrives home.

In the small-sized motorized vehicle disclosed in JP-A 2003-010257, although the map information in the map information storage section is updated based on the path information in the collected path information storage section, and the vehicle is navigated along a path frequently used by a user of the motorized vehicle, the vehicle is not designed, for example, to guide the user home in consideration of the remaining amount of battery.

US 5,815,824 on which the preamble of claim 1 is based, shows a navigation system for an electric automobile, wherein when the automobile is determined to be unable to reach a destination, the navigation system instructs change of the drive plan or displays at least one available charging point along the route to the destination.

US 5,778,326 shows a hybrid vehicle wherein a driving route is searched according to road information and a desired location, and power outputs from a motor and an internal combustion engine are adjusted so that the remaining capacity of a battery is brought to a desired value along the travelling route.

An object of the invention is to provide a small-sized motorized vehicle that can inform a user of a travelable distance, that is, how long the vehicle can travel, and allows the user to drive the vehicle without worrying whether or not the user can arrive at a registered location (home) (return home).

An aspect of the invention is a small-sized motorized vehicle in accordance with claim 1.

Therefore, the information providing means can inform the vehicle occupant of a travelable distance, that is, how far the small-sized motorized vehicle can travel. When there is extra charge in the battery, the vehicle can travel farther.

Further, since the vehicle occupant is prompted to aim for the registered location in accordance with the judgment result obtained from the arrival possibility judging means, for example, when it is judged that the remaining battery charge is inadequate, the vehicle occupant can drive the vehicle without worrying about whether or not the vehicle occupant can arrive at the registered location (home) (return home). As a result, the vehicle occupant on the small-sized motorized vehicle need not be concerned that the vehicle occupant can return home or not, whereby the convenience of the vehicle occupant can be improved.

The information providing means includes guidance path display means for displaying a guidance path from the current location to a registered location. Therefore, the vehicle occupant only has to drive the vehicle in accordance with the displayed guidance path, and can arrive at the registered location (home) (return home) without fail.

The electric power calculation means preferably calculates the amount of electric power based on travel distance information on the path from the current location to the registered location and vertical elevation information on the path from the current location to the registered location. Therefore, the remaining amount of battery can be calculated with improved accuracy. In general, the amount of battery electric power consumed in driving on a road having a road inclination of 10 degrees is approximately 5 times the amount of electric power consumed in driving on a flat road.

A preferred embodiment of the invention will be described below in detail with reference to the accompanying drawings, in which
FIG. 1 is a side view of a small-sized motorized vehicle according to the invention;
FIG. 2 is a plan view of the small-sized motorized vehicle shown in FIG. 1;
FIG. 3 is a front view of the small-sized motorized vehicle shown in FIG. 1;
FIG. 4 is a rear view of the small-sized motorized vehicle shown in FIG. 1;
FIG. 5 is a plan view of a steering handle and rear-view mirrors of the small-sized motorized vehicle;
FIG. 6 is an electric block diagram of the small-sized motorized vehicle shown in FIG. 1;
FIG. 7 is a flowchart showing the operation of information providing means shown in FIG. 6;
FIG. 8 shows an example of how to calculate route information shown in FIG. 7;
FIG. 9 is a graph showing an example of an electric power map shown in FIG. 6; and
FIGS. 10A to 10C show an example of returning home guidance displayed on display means shown in FIG. 6.

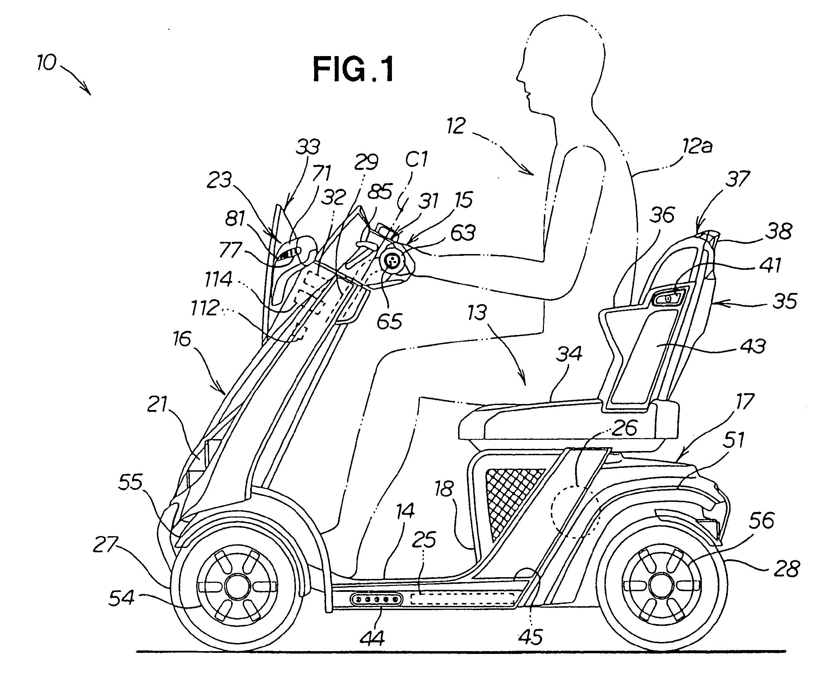

Referring now to FIGS. 1 to 4, a small-sized motorized vehicle 10 includes a seat 13 on which a vehicle occupant 12 is seated; a floor step 14 on which the feet of the vehicle occupant 12 are placed; a steering handle 15 by which the vehicle occupant 12 steers the vehicle; a front cowl 16 that covers a front portion of a vehicle body; a rear cowl 17 that covers a rear portion of the vehicle body; side cowls 18, 18 that surround the portion under the seat 13 (only one of the side cowls is shown); headlights 21, 21 that are provided on the front side of the vehicle body and illuminate an area in front of the vehicle 10; left and right rear-view mirrors 23, 24 that are disposed at an upper portion of the front cowl 16 and by which the vehicle occupant 12 looks behind the vehicle; a battery 25 disposed in a lower portion of the floor step 14; an electric motor 26 that is disposed under the seat 13 and receives electric power from the battery 25; front wheels 27, 27 rotatably and steerably disposed in a front-lower portion of the vehicle body; rear wheels 28, 28 rotatably disposed in a rear-lower portion of the vehicle body, the rear wheels 28, 28 driven by the electric motor 26; a steering shaft 29 for steering the front wheels 27, 27, the upper end of the steering shaft 29 attached to the steering handle 15 and the lower end of the steering shaft 29 connected to the front wheels 27, 27; an operation panel 31 disposed in a central portion of the steering handle 15 and used to drive the vehicle; a navigation system 32 that is disposed in the front cowl 16 and uses a GPS (global positioning system)-based position detection capability; and a display 33 that is provided in an upper central portion of the front cowl 16 and displays driving information and navigation information.

Further, the small-sized motorized vehicle 10 can travel only at 6 km/h (1.67 m/sec) at the maximum and has a restricted vehicle body size smaller than 109 cm in height, 70 cm in width, and 120 cm in total length. Specifically, the small-sized motorized vehicle 10 is a motorized wheel chair used by the elderly or other people as transportation means. Therefore, the vehicle 10, when crossing a road, can hardly avoid by itself an approaching nearby vehicle. It is therefore very important to improve the visibility of the vehicle 10.

The seat 13 is rotatably attached to the vehicle body to make it easier for the vehicle occupant to mount and dismount the vehicle. The seat 13 includes a seat cushion 34 that supports the waist of the vehicle occupant 12 and a seatback 35 that supports the back 12a of the vehicle occupant 12.

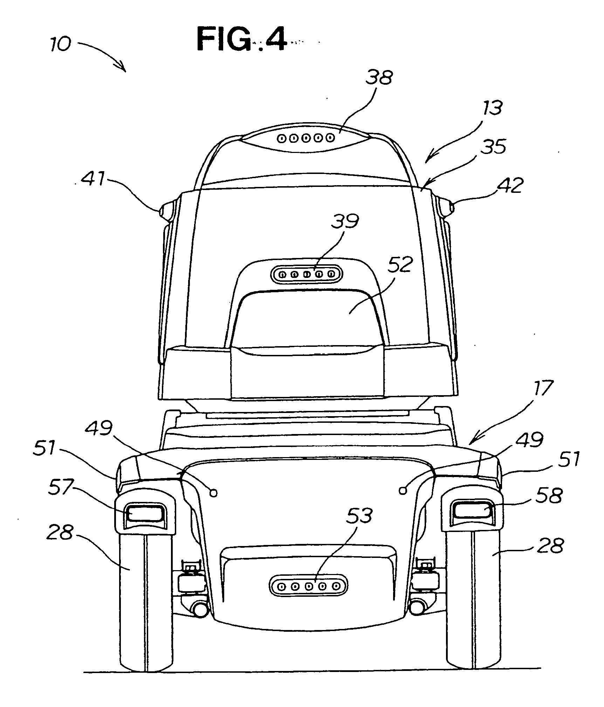

The seatback 35 includes stays 36, 36 that extend forward from left and right sides and support the ribs of the vehicle occupant 12; illuminating means 37 that is provided at the front upper end of the seatback 35 and illuminates the back 12a of the vehicle occupant 12; a tail lamp 38 that is provided at the upper rear end of the seatback 35 and undergoes a change in the state of illumination when the vehicle turns or crosses a road; a seat rear lamp 39 (FIG. 4) that is provided on the rear of the seatback 35 and illuminates concurrently when the headlights 21, 21 are illuminated; left and right side turn indicators 41, 42 provided on the sides of the seatback 35; and side reflectors 43, 43 that are provided on the left and right sides of the seatback 35 and reflect light from nearby vehicles and other objects (only one of the side reflectors is shown).

The tail lamp 38 is warning means for alerting pedestrians and nearby vehicles that the vehicle 10 is turning or crossing a road.

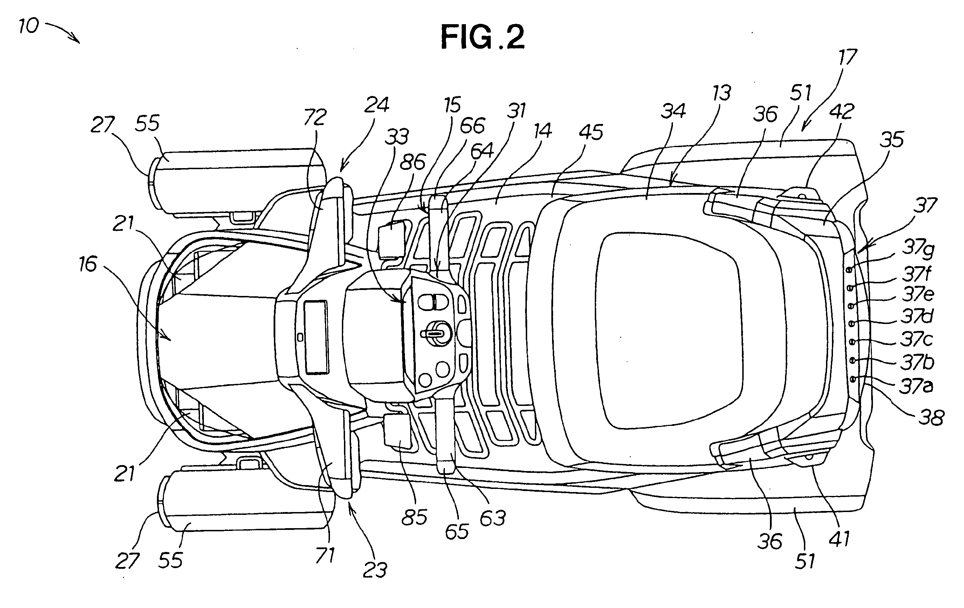

As shown in FIG. 2, the illuminating means 37 includes a plurality of light emitters 37a to 37g, and the light emitters 37a to 37g are disposed to illuminate the entire back 12a of the vehicle occupant 12.

The floor step 14 includes side lamps 44, 44 that are disposed on the left and right sides of the floor step 14 and illuminate concurrently when the headlights 21, 21 are illuminated (only one of the side lamps is shown) and a baggage space 45 provided under the seat 13 and surrounded by the side cowls 18, 18.

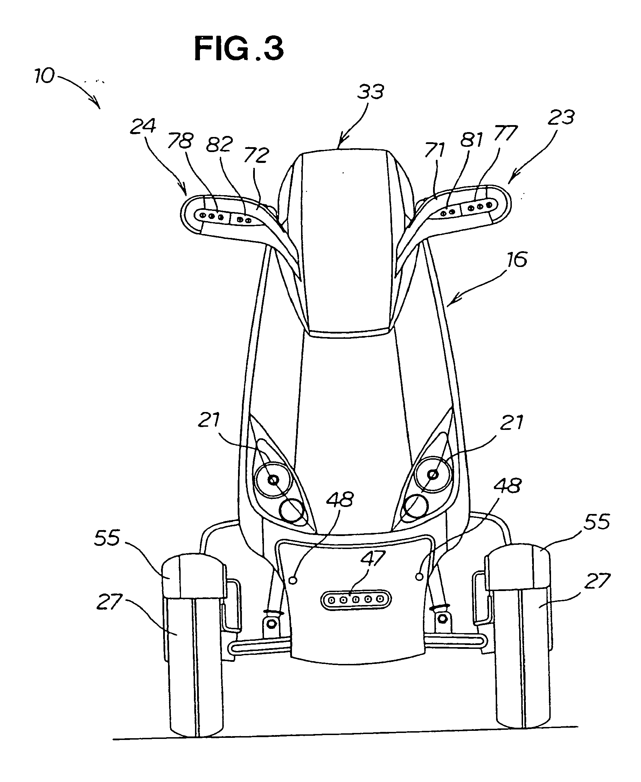

As shown in FIG. 3, the front cowl 16 includes a front lamp 47 that is illuminated concurrently when the headlights 21, 21 are illuminated and front sonar units 48, 48 that detect parked vehicles in front of the vehicle 10 and other obstacles. The front sonar units 48, 48 are obstacle detecting means for detecting obstacles that are in front of the vehicle and invisible to the vehicle occupant.

As shown in FIG. 4, the rear cowl 17 includes a rear lamp 53 that is illuminated concurrently when the headlights 21, 21 are illuminated; rear sonar units 49, 49 that detect obstacles behind the vehicle; rear fenders 51, 51 that cover the portions above the rear wheels 28, 28; a rear reflector 52 that is provided behind the rear fenders 51, 51 and receives and reflects light from nearby vehicles and other objects; and left and right rear turn indicators 57, 58. The rear sonar units 49, 49 are obstacle detecting means for detecting obstacles behind the vehicle.

The front wheels 27, 27 are puncture-resistant tires, and include wheel caps 54, 54 with reflective labels that make the vehicle more visible to pedestrians and nearby vehicles (only one of the wheel caps is shown) and front fenders 55, 55 that can rotate when the steering handle 15 is steered to rotate the front wheels 27, 27.

Since the front fenders 55, 55 rotate along with the front wheels 27, 27, the vehicle occupant 12 can confirm the steering angle of the front wheels 27, 27 while the vehicle occupant 12 remains seated. The vehicle occupant 12 can thus check the motion of the vehicle when backing up the vehicle.

The rear wheels 28, 28 include wheel caps 56, 56 with reflective labels that make the vehicle more visible to pedestrians and nearby vehicles, and the rear fenders 51, 51 formed integrally with the rear cowl 17 cover the portions above the rear wheels 28, 28. The rear wheels 28, 28 are also puncture-resistant tires.

The steering shaft 29 is pivotably attached to the vehicle body with the portion of the steering shaft 29 that is close to on the steering handle 15 inclined backward. That is, the center line C1 of the steering shaft 29, specifically, the portion closer to the steering handle 15 (upper end), is inclined backward.

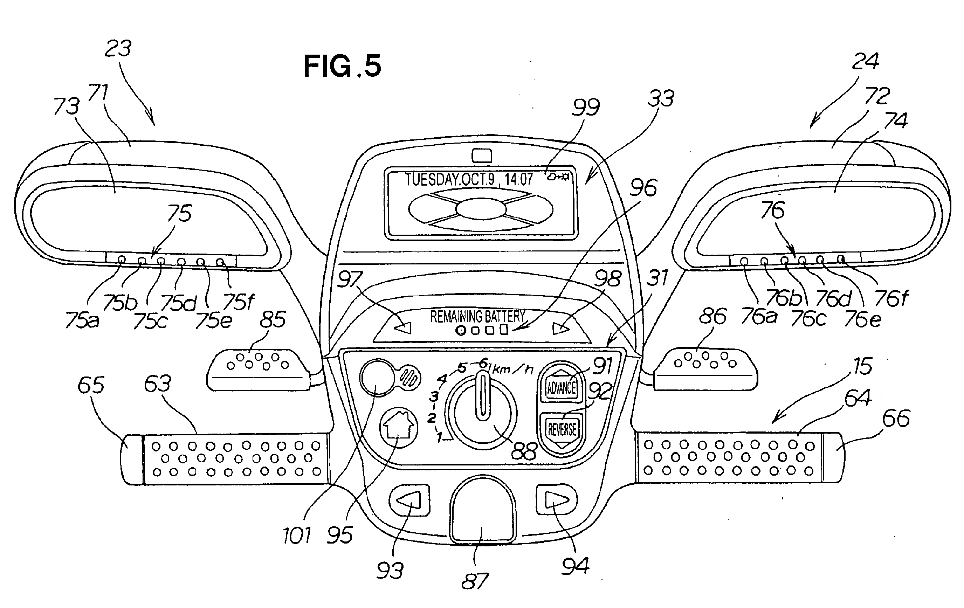

FIG. 5 shows the steering handle and the rear-view mirrors of the small-sized motorized vehicle shown in FIG. 1.

The steering handle 15 is a substantially horizontal bar-shaped handle, and includes left and right handle grips 63, 64 provided at the left and right sides of the bar-shaped handle, and handle-tip lights 65, 66 that are provided at the ends of the handle grips 63, 64 and undergo a change in the state of illumination when the vehicle is turning or crossing a road.

The handle-tip lights 65, 66 are warning means for informing pedestrians and nearby vehicles that the vehicle 10 is turning or crossing a road.

The left and right rear-view mirrors 23, 24 are positioned in front of the handle grips 63, 64, as shown in FIGS. 3 and 5.

The left and right rear-view mirrors 23, 24 include left and right mirror housings 71, 72; left and right mirrors 73, 74 that are provided in the left and right mirror housings 71, 72 and show the situation behind the vehicle; left and right position indicator lamps 75, 76 having a plurality of light emitters 75a to 75f, 76a to 76f disposed substantially in the horizontal direction in lower portions of the left and right mirror housings 71, 72, the left and right position indicator lamps 75, 76 indicating the position of an obstacle behind the vehicle; left and right front turn indicators 77, 78 (FIG. 3) formed in the front surfaces of the left and right mirror housings 71, 72; and left and right mirror-housing lights 81, 82 (FIG. 3) that are formed in the front surfaces of the left and right mirror housings 71, 72 and undergo a change in the state of illumination when the vehicle is turning or crossing a road.

The left and right position indicator lamps 75, 76 are configured in such a way that when the vehicle is moving backward and the rear sonar units 49, 49 detect an obstacle behind the vehicle, the light emitters 75a to 75f, 76a to 76f undergo a change in the state of illumination in accordance with the position of the obstacle.

The left and right mirror-housing lights 81, 82 are warning means for informing pedestrians and nearby vehicles that the vehicle 10 is turning or crossing a road.

The operation panel 31 includes left and right travelling levers 85, 86 provided in front of the handle grips 63, 64; a main switch 87 that turns on the battery 25; a traveling speed setting knob 88 that sets the traveling speed; an advancing button 91 and a reversing button 92 that switch the traveling mode between advancing and reversing; left and right turn indicator buttons 93, 94 that turn on the left and right front turn indicators 77, 78, the left and right side turn indicators 41, 42, and the left and right rear turn indicators 57, 58; a navigation button 95 that activates and deactivates the navigation system 32; and an emergency call button 101 used to request assistance in the event of an emergency.

The left and right travelling levers 85, 86, when operated, perform the same function and reduce the speed of the vehicle when gripped tightly.

The traveling speed setting knob 88 can set the speed from 1 to 6 km/h in a stepless manner. At a speed of 4 km/h or higher, steering the steering handle 15 causes automatic deceleration.

The display 33 includes a remaining battery capacity display 96 for displaying the remaining capacity of the battery 25; left and right turn indicator displays 97, 98 that display whether the left and right front turn indicators 77, 78, the left and right side turn indicators 41, 42, and the left and right rear turn indicators 57, 58 are illuminated or blinking; and a liquid crystal panel 99 that displays driving information and navigation information.

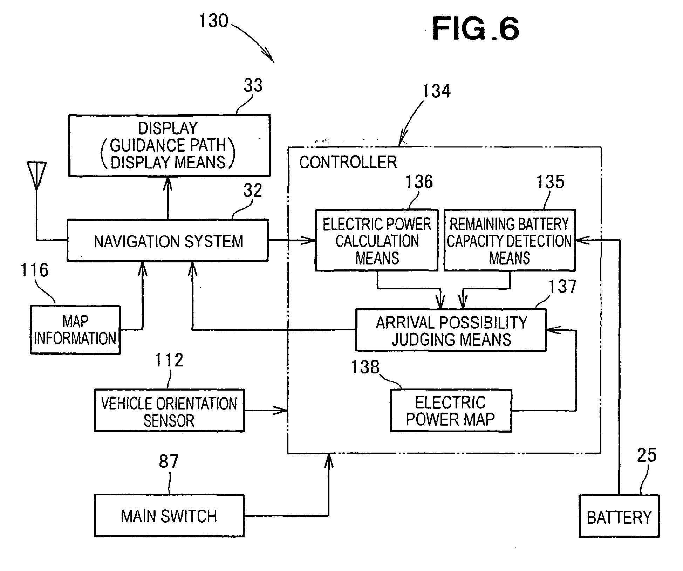

FIG. 6 is an electric block diagram of the small-sized motorized vehicle shown in FIG. 1.

As shown in FIG. 6, the small-sized motorized vehicle 10 (FIG. 1) includes information providing means 130 for providing information required to arrive at a registered location from a current location, the registered location being a desired position registered at the time of starting travelling or a preset position, and the current location being the current position during traveling.

The information providing means 130 includes the navigation system 32 described above; a vehicle orientation sensor 112 that detects the orientation of the vehicle; the main switch 87 described above; a controller 134 that receives inputs of information obtained from the navigation system 32, information obtained from the vehicle orientation sensor 112, and the state of the main switch 87; and the display 33 that displays driving information and navigation information computed in the controller 134.

The display means 33 also serves as guidance path display means for displaying a guidance path from the current location to a registered location, as will be described later.

The controller 134 includes remaining battery capacity detection means 135 for detecting the remaining amount of the battery 25; electric power calculation means 136 for calculating the amount of electric power necessary to arrive at the registered location from the current location based on information on the path from the current position to the registered position obtained from the navigation system 32; arrival possibility judging means 137 for judging whether or not the vehicle can arrive at the registered location from the current location based on information obtained from the remaining battery capacity detection means 135 and the electric power calculation means 136; and an electric power map 138 to which the relationship between road inclination and electric power consumption when the small-sized motorized vehicle 10 is traveling is inputted in advance.

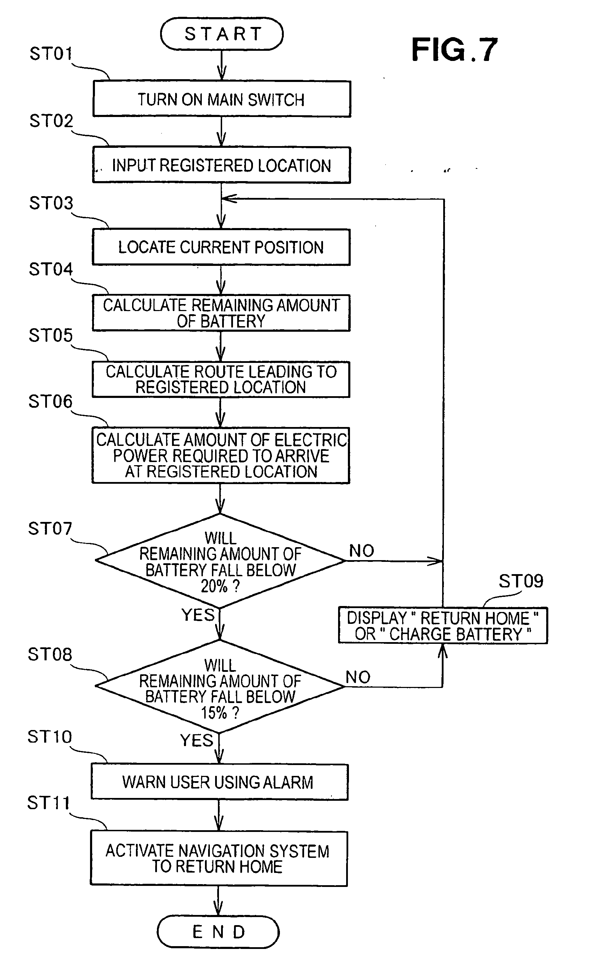

The operation of the information providing means 130 will be described based on the flowchart shown in FIG. 7 while referring to FIG. 6.

Step (hereinafter abbreviated to ST) 01: Turn on the main switch 87. At the same time, turn on the headlights 21, 21 (FIG. 1), the rear light 38, and other lights at night.

ST02: Register a desired position at the time of starting traveling, or set a pre-registered position as a registered location (hereinafter referred to as "registered location"). The position where the user's home is located is typically the registered location.

Since the registered location is a desired position at the time of starting traveling or a preset position, the registered location may be considered as a location at which the user wishes to ultimately arrive at the time of starting traveling (ultimate desired arrival location).

ST03: Use the navigation system 32 to locate the current position of the vehicle 10 (hereinafter referred to as "current location")

ST04: Use the remaining battery capacity detection means 135 to calculate the remaining amount of the battery 25 at the current location.

ST05: Calculate a route leading to the registered location.

ST06: Use the electric power calculation means 136 to calculate the amount of electric power required to arrive at the registered location based on the route information.

ST07: Use the arrival possibility judging means 137 to compare the current remaining amount of the battery 25 with the amount of electric power required to arrive at the registered location, and judge whether or not the remaining amount of the battery 25 becomes lower than 20% when the vehicle returns to the registered location. If the decision is YES, the control proceeds to ST08. If the decision is NO, the control returns to ST03. In the latter case, the vehicle can travel farther.

ST08: Use the arrival possibility judging means 137 to compare the current remaining amount of the battery 25 with the amount of electric power required to arrive at the registered location, and judge whether or not the remaining amount of the battery 25 becomes lower than 15% when the vehicle returns to the registered location. When the judgment is YES, the control proceeds to ST10. When the judgment is NO, the control returns to ST03 via ST09. In the latter case, the vehicle can travel farther.

ST09: Display means 33 displays a message that prompts the user to return home or charge the battery.

ST10: An alarm (not shown) provided in the display means 33 warns the user.

ST11: The controller 134 automatically activates the navigation system 32, and the display means (guidance path display means) 33 starts guidance to the registered location (home) (typically called "returning home navigation"). It is alternatively possible to disconnect the navigation system 32 by operating the navigation button 95 (FIG. 5) and aim for another destination different from the registered location (home).

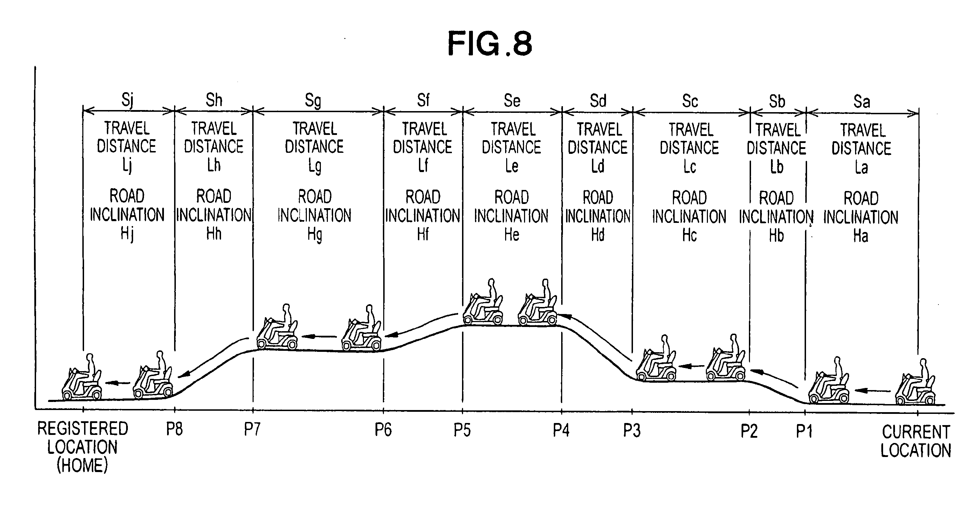

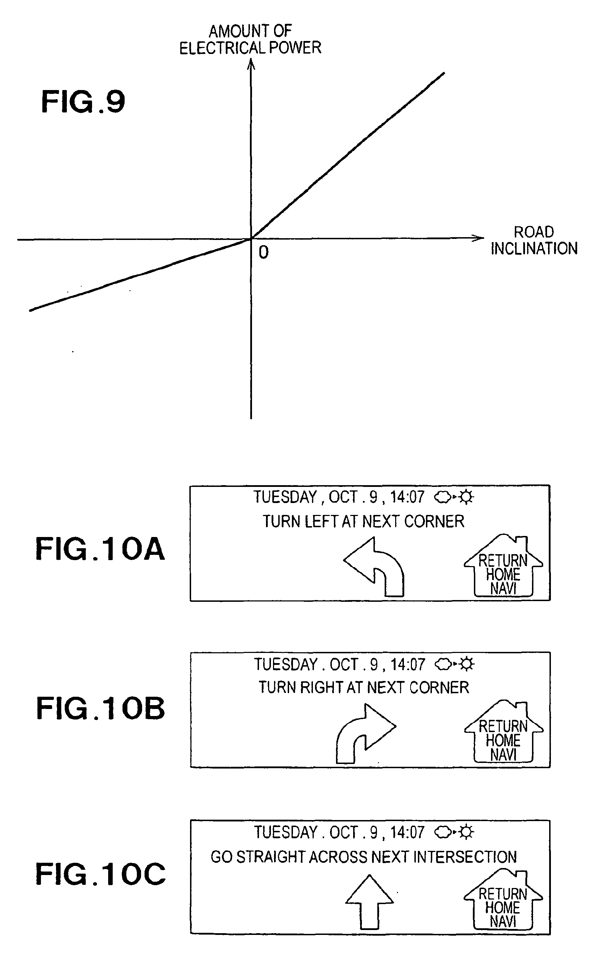

FIG. 8 shows an example of how to calculate information on the route for the small-sized motorized vehicle, and FIG. 9 shows an example of the electric power map for the small-sized motorized vehicle.

As shown in FIG. 8, the electric power calculation means 136 (FIG. 6) uses map information 116 stored in the navigation system 32 to find inflection points P1 to P8 where the road inclination changes along a route between the current location and the registered location (home) and divide the route between the current location and the registered location (home) in such a way that the inflection points P1 to P8 where the road inclination changes are division points.

That is, the route is segmented as follows: The segment from the current location to the inflection point P1 is Sa. The segment from the inflection point P1 to the inflection point P2 is Sb. The segment from the inflection point P2 to the inflection point P3 is Sc. The segment from the inflection point P3 to the inflection point P4 is Sd. The segment from the inflection point P4 to the inflection point P5 is Se. The segment from the inflection point P5 to the inflection point P6 is Sf. The segment from the inflection point P6 to the inflection point P7 is Sg. The segment from the inflection point P7 to the inflection point P8 is Sh. The segment from the inflection point P8 to the registered location (home) is Sj.

The electric power calculation means 136 refers to the electric power map 138 shown in FIG. 9, calculates the amounts of electric power consumed in the segments Sa to Sj using travel distances La to Lj and road inclinations (average road inclinations) Ha to Hj, and sums the amounts of electric power consumed in the segments Sa to Sj.

It is known that, in general, the amount of battery electric power consumed in driving on a road having a road inclination of 10 degrees is approximately 5 times the amount of electric power consumed in driving on a flat road. Therefore, the road inclination is an essential factor to estimate the amount of electric power consumed (electric power consumption) in the small-sized motorized vehicle 10.

Since the electric power calculation means 136 (FIG. 6) calculates the amounts of electric power based on the travel distance information on the route from the current location to the registered location (travel distances La to Lj) and the vertical elevation information on the route from the current location to the registered location (road inclinations Ha to Hj), the remaining amount of the battery 25 can be calculated with improved accuracy.

The electric power map 138 shown in FIG. 9 shows the relationship between electric power consumption and road inclination. The greater the road inclination, the greater the electric power consumption. When the sign of the road inclination is negative (downslope), electric power is regenerated.

That is, in the small-sized motorized vehicle 10 shown in FIG. 1 in which electric power is supplied from the battery 25 to the electric motor 26 and the electric motor 26 drives the rear wheels 28, 28 and causes them to rotate, information required to arrive at a registered location from a current location is provided, the registered location being a desired position registered at the time of starting travelling or a preset position and the current location being the current position during traveling.

As shown in FIG. 6, since the information providing means 130 includes the remaining battery capacity detection means 135 for detecting the remaining amount of battery; the electric power calculation means 136 for calculating the amount of electric power necessary to arrive at the registered location from the current location based on information on the path from the current location to the registered location; and the arrival possibility judging means 137 for judging whether or not the vehicle can arrive at the registered location from the current location based on information obtained from the remaining battery capacity detection means 135 and the electric power calculation means 136, the user can know a travelable distance, that is, how long the vehicle can travel. When there is an extra amount of the battery 25, the vehicle can travel farther.

Further, since the information providing means 130 prompts the vehicle occupant 12 to aim for the registered location in accordance with the judgment result obtained from the arrival possibility judging means 137, for example, when it is judged that the remaining amount of the battery 25 is not enough, the vehicle occupant 12 can drive the vehicle without worrying about whether or not the vehicle occupant 12 can arrive at the registered location (home) (return home). As a result, the vehicle occupant 12 on the small-sized motorized vehicle 10 will not have any concern about being able to return home or not, whereby the convenience for the vehicle occupant can be improved.

FIGS. 10A to 10C show an example of home-return guidance displayed on the display means 33 of the small-sized motorized vehicle 10.

The display means 33 shown in FIG. 5 is guidance path display means for guiding the vehicle along a path leading to the registered location (home), and the following screens are displayed. In FIG. 10A, when a message "Turn left at the next corner" is displayed, the user is prompted to turn left. In FIG. 10B, when a message "Turn right at the next corner" is displayed, the user is prompted to turn right. In FIG. 10C, when a message "Go straight across the next intersection" is displayed, the user is prompted to go straight. The user can then return home without being lost.

Since the information providing means 130 includes the display means (guidance path display means) 33 for displaying a guidance path from the current location to the registered location, the vehicle occupant 12 only has to drive the vehicle in accordance with the displayed guidance path, and can arrive at the registered location (home) (return home) without fail.

In the small-sized motorized vehicle according to the invention, as shown in FIGS. 8 and 9, the electric power calculation means 136 divides the route between the current location and the registered location (home) in such a way that the inflection points P1 to P8 where the road inclination changes are division points in order to calculate the amounts of electric power, but the invention is not limited thereto. For example, the route between the current location and the registered location (home) may be divided into n portions, where n may vary in accordance with the total length of the route (for example, n is 20 for a portion between a certain segment and a segment at 3 km, and n is 40 for a portion between the segment at 3 km to another segment). Further, the route between the current location and the registered location (home) may be divided into portions, each of which has a fixed value (for example, the route may be divided into 100 meter-segments or 500 meter-segments, or the length of each segment may vary in accordance with the total length of the route).

In the small-sized motorized vehicle according to the invention, as shown in FIG. 7, the display means 33 displays a message that prompts the vehicle occupant to return home or charge the battery, or warns the vehicle occupant using an alarm provided in the display means 33 in accordance with the remaining amount of the battery 25. Such messages and warnings are presented by way of example of alert, and any alert may be arbitrarily issued. Alternatively, a plurality of alerts may be combined as appropriate.

A small-sized motorized vehicle that is guided to a registered location in consideration of the remaining amount of battery. The motorized vehicle includes information providing means for providing a vehicle occupant with information required to arrive at a registered location from the current location. The information providing means includes arrival possibility judging means for judging whether or not the vehicle can arrive at the registered location from the current location based on not only a calculated amount of electric power necessary to arrive at the registered location from the current location but also the remaining amount of battery. The arrival possibility judging means guides the vehicle occupant to the registered location.

## Claims

1. A small-sized motorized vehicle comprising
an electric motor (26) to which electric power is supplied from a battery (25);
wheels (27, 28) driven and made to rotate by the electric motor (16); and
information providing means (130) for providing information required to arrive at a registered location from a current location, the registered location being a desired position registered at the time of starting travelling or a preset position, and the current location being the current position during traveling, wherein
the information providing means (130) includes:
a navigation system (32) using a GPS-based position detection capability;
remaining battery capacity detection means (135) for detecting the remaining amount of energy of the battery (25);
electric power calculation means (136) for calculating the amount of electric energy necessary to arrive at the registered location from the current location based on information on a path from the current position to the registered position;
arrival possibility judging means (137) for judging whether or not the vehicle can arrive at the registered location from the current location based on information obtained from the remaining battery capacity detection means (135) and the electric power calculation means (136);
and
guidance path display means (33) for displaying a guidance path from the current location to a registered location,
wherein the information providing means (130) prompts a vehicle occupant to head to the registered location in accordance with the result of the judgement made in the arrival possibility judging means (137),
**characterized in that** the display means (33) is provided in an upper central portion of a front cowl (16) that covers a front portion of a vehicle body, and
wherein when the arrival possibility judging means (137) judges the remaining amount of energy of the battery (25) on arrival of the vehicle at the registered location is lower than a predetermined threshold value,
the navigation system (32) is automatically activated and the guidance path display means (33) starts guidance to the registered location.

2. The motorized vehicle of claim 1, wherein the electric power calculation means (136) calculates the amount of electric energy based on travel distance information on the path from the current location to the registered location and vertical elevation information on the path from the current location to the registered location.

## Patentansprüche

1. Motorisiertes Kleinfahrzeug, umfassend:
einen Elektromotor (26), dem von einer Batterie (25) elektrischer Strom zugeführt wird;
Räder (27, 28), die von dem Elektromotor (16) drehend angetrieben sind; und
ein Informationsbereitstellungsmittel (130) zum Bereitstellen von Information, die zur Ankunft an einem registrierten Ort von einem gegenwärtigen Ort erforderlich ist, wobei der registrierte Ort eine gewünschte Position, die beim Start der Fahrt registriert wird, oder eine vorbestimmte Position ist, und der gegenwärtige Ort die gegenwärtige Position während der Fahrt ist, worin
das Informationsbereitstellungsmittel (130) enthält:
ein Navigationssystem (32), das eine auf GPS-basierende Positions-Erfassungsfähigkeit nutzt;
ein Batterie-Restkapazitäts-Erfassungsmittel (135) zum Erfassen der Energierestmenge der Batterie (25);
ein Elektrische-Energie-Berechnungsmittel (136) zum Berechnen der Menge an elektrischer Energie, die erforderlich ist, um vom gegenwärtigen Ort am registrierten Ort anzukommen, basierend auf Information über einen Weg von der gegenwärtigen Position zur registrierten Position;
ein Ankunft-Möglichkeit-Bewertungsmittel (137) zum Bewerten, ob das Fahrzeug vom gegenwärtigen Ort an dem registrierten Ort ankommen kann oder nicht, basierend auf Information, die von dem Batterie-Restkapazität-Erfassungsmittel (135) und dem Elektrische-Energie-Berechnungsmittel (136) erhalten wird; und
ein Führungsweg-Anzeigemittel (33) zum Anzeigen eines Führungswegs von dem gegenwärtigen Ort zu einem registrierten Ort,
worin das Informationsbereitstellungsmittel (130) gemäß dem Ergebnis der in dem Ankunft-Möglichkeit-Bewertungsmittel (137) durchgeführten Bewertung einen Fahrzeugbenutzer auffordert, auf den registrierten Ort zuzuhalten,
**dadurch gekennzeichnet, dass** das Anzeigemittel (33) in einem oberen mittleren Abschnitt einer Frontverkleidung (16) vorgesehen ist, die einen vorderen Abschnitt eines Fahrzeugkörpers abdeckt, und
worin, wenn das Ankunft-Möglichkeit-Bewertungsmittel (137) bewertet,
dass die Energierestmenge der Batterie (25) bei Ankunft des Fahrzeugs an dem registrierten Ort niedriger als ein vorbestimmter Schwellenwert ist, das Navigationssystem (32) automatisch aktiviert wird und
das Führungsweg-Anzeigemittel (33) mit der Führung zu dem registrierten Ort beginnt.

2. Das motorisierte Fahrzeug von Anspruch 1, worin das Elektrische-Energie-Berechnungsmittel (136) die elektrische Energiemenge basierend auf Fahrstreckeninformation auf dem Weg vom gegenwärtigen Ort zum registrierten Ort und vertikaler Höheninformation über den Weg vom gegenwärtigen Ort zum registrierten Ort berechnet.

## Revendications

1. Véhicule à moteur de petite taille, comprenant :
un moteur électrique (26) auquel une énergie électrique est fournie par une batterie (25) ;
des roues (27, 28) entraînées et amenées à tourner par le moteur électrique (16) ; et
des moyens de fourniture d'informations (130) pour fournir des informations nécessaires pour arriver à un emplacement enregistré à partir d'un emplacement actuel, l'emplacement enregistré étant une position souhaitée enregistrée à l'instant de début de déplacement ou une position prédéterminée, et l'emplacement actuel étant la position actuelle pendant le déplacement, dans lequel
les moyens de fourniture d'informations (130) comprennent :
un système de navigation (32) utilisant une capacité de détection de position basée sur le GPS ;
des moyens de détection de capacité restante de batterie (135) pour détecter la quantité restante d'énergie de la batterie (25) ;
des moyens de calcul d'énergie électrique (136) pour calculer la quantité d'énergie électrique nécessaire pour arriver à l'emplacement enregistré à partir de l'emplacement actuel sur la base d'informations concernant un trajet de la position actuelle à la position enregistrée ;
des moyens de jugement de possibilité d'arrivée (137) pour juger si, oui ou non, le véhicule peut arriver à la position enregistrée à partir de la position actuelle sur la base d'informations obtenues des moyens de détection de capacité restante de batterie (135) et des moyens de calcul d'énergie électrique (136) ; et
des moyens d'affichage de trajet de guidage (33) pour afficher un trajet de guidage de l'emplacement actuel à un emplacement enregistré,
dans lequel les moyens de fourniture d'informations (130) invitent un occupant du véhicule à se diriger vers l'emplacement enregistré conformément au résultat du jugement effectué dans les moyens de jugement de possibilité d'arrivée (137),
**caractérisé en ce que** les moyens d'affichage (33) sont prévus dans une partie centrale supérieure de capot avant (16) qui recouvre une partie avant d'une carrosserie de véhicule, et
dans lequel, lorsque les moyens de jugement de possibilité d'arrivée (137) jugent que la quantité restante d'énergie de la batterie (25) à l'arrivée du véhicule à l'emplacement enregistré est inférieure à une valeur de seuil prédéterminée, le système de navigation (32) est activé automatiquement et les moyens d'affichage de trajet de guidage (33) débutent le guidage vers l'emplacement enregistré.

2. Véhicule motorisé selon la revendication 1, dans lequel les moyens de calcul d'énergie électrique (136) calculent la quantité d'énergie électrique sur la base d'informations de distance de déplacement concernant le trajet de l'emplacement actuel à l'emplacement enregistré et d'informations d'élévation verticale concernant le trajet de l'emplacement actuel à l'emplacement enregistré.
